# EUROPEAN PATENT SPECIFICATION

(11) **EP 4 239 251 B1**
(45) Date of publication and mention of the grant of the patent: **05.11.2025**
(21) Application number: 23155712.5
(22) Date of filing: 09.02.2023
(51) Int. Cl.: F24D 3/14, E04F 15/18, B32B 7/00

(54) **UNDERFLOOR HEATING SYSTEM**
FUSSBODENHEIZUNGSSYSTEM
SYSTÈME DE CHAUFFAGE AU SOL

(30) Priority: 09.02.2022 GB 202201648
(43) Date of publication of application: 06.09.2023
(73) Proprietor: Knauf Insulation srl, 4600 Visé (BE)
(72) Inventor: Justin, Marko, 1435 Mont Saint Guibert (BE); Bernard, Primoz, 1435 Mont Saint Guibert (BE); Sebenik, Gorazd, 1435 Mont Saint Guibert (BE); Bevk, Darko, 1435 Mont Saint Guibert (BE)
(74) Representative: ARC-IP

(56) References cited:
- EP-A1- 3 666 989
- WO-A1-2019/077072
- CN-U- 209 279 236
- CN-U- 214 117 369
- DE-U1- 202018 106 975
- GB-A- 2 552 985

## Description

This invention relates to an underfloor heating system for providing indoor climate control (heating of an indoor space), and more particularly to hydronics underfloor heating systems which use a fluid, notably water, running through a heating pipe in the flooring system as a heat transfer medium.

Typically, underfloor heating systems are provided by arranging a layer of insulation material over a supporting surface, for example a concrete layer, arranging and securing a heating pipe (typically forming a serpentine), notably a plastic heating pipe at the upper surface of the layer of insulation material, and pouring in situ a screed layer, generally concrete, over the assembly so that the heating pipe is embedded in the concrete layer, as a protective layer for the heating pipe. As used in herein, the term "screed" means a covering layer made of a material that is to be applied in a liquid or viscous form and subsequently hardened in situ, notably a hydraulic binder mass, for example concrete or cement, or a plastics binder mass.

During installation, some sections of the heating pipe are bent to form a desired shape of the heating pipe, notably so the heating pipe includes S shapes and/or loop sections so that the heating pipe is arranged to have spaced pipe sections which together extend over the whole upper surface of the layer of insulation material. Retainers are used to maintain the heating pipe in this desired, laid-out arrangement prior to and during installation and hardening of the overlying screed. Surprisingly, it has be found that stresses induced in the heating pipe when it is bent can act to displace the pipe section vertically away from the surface of the insulation material on which it has been laid out. This can be exacerbated during pouring of the screed. It is desirably, of course, to ensure that the entire heating pipe is covered by the screed and that each section of the heating pipe is overlaid with the same thickness of screed. Examples of known retainers include those disclosed in:
- DE202015100914U1 which discloses, in sequence, a support structure, a layer of mineral wool insulation and an overlying cover layer comprising one part of a hook and loop fastening system, the other part of the hook and loop being arranged on the heating pipe so that the heating pipe arrangement is secured to the system by a hook and loop fastening system; and
- EP1248047 which describes a heating pipe which is secured with retaining anchors having a U-shape bracket and two legs adapted to penetrate into a foam panel.
CN209279236 discloses an energy-saving floor heating structure.
GB2552985 discloses a roof system comprising, in sequence: a support structure; a mineral wool insulation panel comprising a core of mineral fibres and a non-woven veil secured to its upper surface by a binder; and an overlying weatherproof membrane secured to the mineral wool insulation panel by an adhesive.
EP3666989 discloses a flat roof insulating system comprising a weatherproof membrane secured to an insulating panel by a hook and loop fastening system.
CN214117369 relates to a floor heating floor anti-expansion and contraction structure. WO2019/077072 relates to the use of an adhesive in particulate form for securing a facing to a main surface of a mineral wool blanket.
DE202018106975 relates to an insulating device for a surface temperature control device, in particular for a surface heating system such as underfloor heating.

One aim of the present invention is to provide an improved underfloor heating system, notably in which the heating pipe is easy to install, remains at its desired position, even in bent sections of the heating pipe, until the screed has set, has good walkability during installation and provides good sound insulation and fire resistance.

In accordance with one of its aspects, the present invention provides an underfloor heating system as defined in claim 1. Additional aspects of the invention are defined in independent claims. The dependent claims define preferred and/or alternative embodiments.

In accordance with one aspect, the present invention provides an underfloor heating system comprising, in order:
- a supporting surface;
- an insulating floor panel comprising a mineral wool insulation panel and an overlying facing comprising an aluminium scrim foil secured to the mineral wool insulation panel;
- a heating pipe arranged and secured over the upper surface of the insulating floor panel by retaining anchors anchored into the insulating floor panel; and
- optionally, a screed layer embedding the heating pipe, notably concrete; and
wherein the insulating floor panel comprises a reinforcement veil comprising a filler between the mineral wool insulation panel and the aluminium scrim foil.

In accordance with another aspect, the present invention provides an indoor floor of a building comprising an underfloor heating system as disclosed herein.

In accordance with a further aspect, the present invention provides a method of manufacturing an insulating floor panel comprising
- providing a mineral wool insulation panel, notably comprising rock wool fibres;
- securing a reinforcing veil on a major surface of the mineral wool insulation panel; and
- subsequently securing an aluminium scrim foil with an adhesive, notably a hot melt adhesive, to the reinforcing veil.

In accordance with claim 11, the present invention provides a method of manufacturing an insulating floor panel for use in an underfloor heating system in accordance with claim 1. The method comprises
- providing a mineral wool insulation batt, comprising rock wool fibres;
- securing a non-woven reinforcing veil comprising a filler, at a major surface of the mineral wool insulation batt ; and
- subsequently securing an aluminium scrim foil with an adhesive, notably a hot melt adhesive, to the non-woven reinforcing veil;
subsequently cutting the mineral wool insulation batt to form the insulating floor panel,
wherein securing the reinforcing veil at the major surface of the mineral wool insulation batt comprises applying the reinforcing veil at the major surface of the mineral wool batt as the mineral wool insulation batt moves along a manufacturing line, preferably including applying additional binder onto a surface of the reinforcing veil, and subsequently bringing the said surface of the reinforcing veil into contact with the mineral wool insulation batt, and subsequently securing the reinforcing veil and the batt together during passage through a curing oven to cure binder present in the mineral wool insulation batt, and the optional additional binder

In accordance with claim 12, the present invention provides a method of providing an underfloor heating system at an interior of a building comprising
- forming a first layer of a floor by arranging a plurality of insulating floor panels;
- subsequently providing and securing with retaining anchors a heating pipe on the upper surface of the first layer of a floor, notably to extend over substantially the whole upper surface of the plurality of insulating floor panels; and
- optionally providing a screed layer over the secured heating pipe, embedding the secured heating pipe;
wherein the insulating floor panel comprises a mineral wool insulation panel and an overlying facing comprising an aluminium scrim foil secured to the mineral wool insulation panel; and wherein the insulating floor panel comprises a reinforcement veil comprising a filler between the mineral wool insulation panel and the aluminium scrim foil.

### Supporting surface

The supporting surface provides a portion of a building or structure upon which the underfloor heating system is installed; it may be of steel, wood, such as OSB, concrete or cement. A water-repellent barrier layer, for example a polymer sheet, polyethylene sheet, reinforced polyethylene sheet, bitumen layer or bitumen bonded felt, may be provided between the supporting surface and the mineral wool panel to prevent water penetration.

### Mineral wool insulation panel

The mineral wool insulation panel preferably comprises rock wool fibres (also called stone wool fibres); it may comprise at least 90%wt, at least 93%wt, at least 95%wt, or at least 98%wt of mineral wool fibres, notably rock wool fibres. Preferably, the mineral wool fibres are oriented substantially parallel to the major surfaces of the mineral wool panel; this improves performance as an acoustic barrier. Thus, particularly when the mineral wool fibres are rock wool fibres, the fibres are preferably not crimped.

The mineral wool panel may have a density which is ≥ 70 kg/m³, ≥ 80 kg/m³ or ≥ 90 kg/m³ and/or which is ≤ 170 kg/m³ or ≤ 150 kg/m³. Use of a rock wool insulating panel having a density in the range 70-170kg/m³, more particularly in the range 90-150kg/m³ is advantageous as it provides a particularly desirable combination of thermal and acoustic properties with good mechanical performance for supporting the screed layer. Mineral wool, particularly rock wool, insulating panel also provides advantageous fire resistance to the underfloor heating system.

The mineral wool insulation panel preferably has one or more of the following features:
- a compressive strength which is ≥ 20 kPa or ≥ 25 kPa and/or ≤ 55 kPa, ≤ 40 kPa or ≤ 30 kPa, measured in accordance with EN13162; and/or
- a dynamic stiffness less than 30 MN/m³, preferably less than 20 MN/m³, more preferably in the range 15MN/m³ - 20MN/m³, measured in accordance with EN29052-1 ; and/or
- a point load resistance which is ≥ 300 N, ≥ 400 N, ≥ 500 N or ≥ 650 N, preferably in the range from 300 N to 500 N; measured in accordance with EN12430 on the side to which the reinforcement veil is secured; and/or
- a compressibility of ≤3mm or ≤5mm, measured in accordance with EN12431 on the side to which the reinforcement veil is secured.
These parameters, alone or in combination, provide good mechanical performance, notably walkability for when an installer is walking on the insulating floor panel.

The mineral wool insulation panel may have a thermal conductivity which is ≤ 40 mW/m.K. or ≤ 39 mW/m.K. and/or ≥ 30 mW/m.K., measured at 10°C.

The mineral wool insulation panel preferably has a fire classification of at least Euroclass B, more preferably Euroclass A1 or A2 as determined under EN 13501-1.

The mineral wool insulating panel preferably has a thickness of at least 15mm, at least 20mm or at least 30mm and/or less than 70mm, less than 60mm or less than 50mm. In a preferred embodiment, the mineral wool insulating panel has a thickness in the range 30-50mm. This allows the mineral wool panel to provide desirable properties without taking up excessive space.

The mineral wool insulation panel generally comprises a mineral wool binder which serves to hold its individual fibres together, notably an organic, thermoset binder. The mineral wool binder may make up ≥ 2 wt%, ≥ 2.5 wt% or ≥ 3 wt% and/or ≤ 7 wt% or ≤ 6 wt% or ≤ 5 wt% of the mineral wool insulation panel. The binder content may be determined by LOI (loss on ignition). Preferably, the mineral wool binder and the mineral wool insulation panel contain no free formaldehyde.

### Reinforcement veil

The reinforcement veil is preferably a non-woven veil. Alternatively, it may be a woven veil. The fibers of the reinforcement veil, notably the non-woven veil, preferably comprise, consist or consist essentially of glass fibres. As used herein, the term "consists essentially of" is intended to limit the scope of a definition or claim to the specified materials or steps and those that do not materially affect the basic and novel characteristic(s) of the so defined or claimed invention. Alternatively, the fibres of the reinforcement veil may comprise glass fibres and polymer fibres, notably PE fibres, notably between 70 wt% and 90 wt% glass fibres and between 30 wt% and 10 wt% of polymer fibres.

The reinforcement veil is preferably secured on the upper surface of the mineral wool insulation panel by a binder, preferably the same binder present in the mineral wool insulation panel. Notably, the reinforcement veil may be applied to the upper surface of a mineral wool batt (a continuous layer running on a conveyor of a manufacturing line) as the batt moves along a manufacturing line, preferably by applying additional binder onto the surface of the reinforcement veil to be brought into contact with the upper surface of the mineral wool insulation panel so that binder present in the batt and the additional binder applied to the reinforcement veil secure the reinforcement veil and the batt together during passage through a curing oven to cure the binder. This is facilitated by providing openings in the reinforcement veil comprising the filler, notably by suitably selecting the amount of filler, to allow passage of heated air within the curing oven through the veil.

Alternatively, the reinforcement veil may be secured to the upper surface of a mineral wool insulation batt or a mineral wool panel (a mineral wool batt cut to size) after the mineral wool batt has passed through a curing oven by an adhesive, notably a hot melt adhesive.

The fibres of the reinforcement veil are preferably held together by a veil binder; this may be a thermoset binder. The veil binder may comprise a PVC binder or a PVC based binder. The reinforcement veil may comprise ≥ 5 wt% or ≥ 8 wt% and/or ≤ 30 wt% or ≤ 28 wt% of veil binder.

The reinforcement veil comprises a filler, notably an inorganic filler, for example comprising calcium oxide, calcium hydroxide, aluminium hydroxide, clay, talc, magnesium silicate, hydrated magnesium silicate or mixtures thereof. The filler, or the combination of filler and optional flame retardant, may comprise ≥ 10 wt%, or ≥ 15 wt% or ≥ 20 wt% or ≥ 25 wt%, or ≥ 30%wt, or ≥ 40%wt and/or ≤ 80 wt%, or ≤ 70 wt%, or ≤ 60 wt% of the reinforcement veil. Preferably, the filler comprises ≥ 40%wt and ≤ 80 wt% of the reinforcement veil. The reinforcement veil may be formed by applying the filler to a reinforcement veil having a weight which is ≥ 30 g/m² or ≥ 40 g/m² or ≥ 45 g/m² and/or ≤ 100g/m², or ≤ 80g/m², or ≤ 70g/m². The reinforcement veil, including the filler, may have a weight which is ≥ 100 g/m² or ≥ 150 g/m² or ≥ 200 g/m² or ≥ 250 g/m² or ≥ 300 g/m² and/or ≤ 500 g/m², or ≤ 450 g/m² or ≤ 400 g/m². For example, the reinforcement veil (including any filler and coating) may have a weight which is ≥ 200 g/m² or ≥ 250 g/m² and/or ≤ 350 g/m² or ≤ 400 g/m².

The veil may comprise a flame retardant, for example comprising a phosphate, a borate, a hydroxide or aluminium hydroxide. The reinforcement veil may comprise a water repellent or hydrophobic agent, for example a fluorocarbon, which may comprise ≥ 0.5 wt% or ≥ 1 wt% and/or ≤ 2 wt% or ≤ 1.5 wt% of the reinforcement veil; this may form part of the veil binder. Where the filler comprises talc, this may provide hydrophobic characteristics to the reinforcement veil. Where the filler comprises Al₂O₃, this may provide fire resistant characteristics to the reinforcement veil. The reinforcement veil may be coated on only one of its major surfaces or it may be coated on each of its two major surfaces; the coating may comprise a filler and/or a flame retardant and/or a water repellent or hydrophobic agent, notably as described above.

The fibres of the reinforcement veil may be selected such that at least 80% of the fibres by weight have a diameter which is: AA 0.8-1.2µm; A 1.2-2.5µm; B 2.5-3.8 µm; C 3.8-5.0 µm; D 5.0-6.4 µm; E 6.4-7.6 µm; F 7.6-9.0 µm; G 9.0-10.2 µm; H 10.2-11.4 µm or J 11.4-12.7 µm. The reinforcement veil may have a width which is ≥ 1.5 m or ≥ 1.8 m and/or ≤ 2.6 m or ≤ 2.4 m. The reinforcement veil may be supplied in the form of a roll; this facilitates application to the mineral wool insulation panel. Such a roll may have: an external diameter which is ≥ 0.5 m or ≥ 0.8m and/or ≤ 1.6 m or ≤ 1.4 m; it may comprise a continuous length of veil which is ≥ 800 m or ≥ 1000 and/or ≤ 2000 m or ≤ 1800 m.

It has been found that the use of a reinforcement veil, particularly a non-woven veil which comprises a filler,
- improves the adhesion of the aluminium scrim foil to the mineral wool insulation panel,
- reduces breakage of the fibres at the upper surface of the mineral wool insulation panel when an installer walks on the insulating floor panel,
- integrates any dust present in the mineral wool insulation panel (e.g. mineral wool fibre particles) between the veil and the mineral wool insulation panel, and
- increases the pull out force required to remove the retaining anchors retaining a heating pipe, in particular a heating pipe forming a serpentine.

### Aluminium scrim foil

The aluminium scrim foil is a unitary foil which comprises i) an aluminium layer and ii) a scrim layer comprising a mesh having openings formed between continuous fibres, notably glass fibres.

The aluminium scrim foil may be secured to the upper surface of the reinforcement veil by an adhesive, notably a hot melt adhesive, preferably a polyethylene adhesive. The aluminium scrim foil is preferably secured to the reinforcement veil after the mineral wool insulation batt passes through a curing oven. In a preferred method, the aluminium scrim foil is secured by applying heat and pressure, notably with a hot drum. The hot drum may have a surface temperature of at least 150°C, at least 200°C and/or less than 350°C and preferably less than 250°C; particularly at these temperatures, the facing may be pressed between the mineral wool panel comprising the reinforcement veil and the heated drum for a duration which is ≥ 5 seconds, preferably ≥ 10 seconds and preferably ≤ 30 seconds.

The scrim layer of the aluminium scrim foil may comprise square or rectangular openings, preferably wherein each side of such square or rectangular openings being ≥ 5mm or ≥ 7mm and/or < 10mm or < 8mm. If below 5mm, the meshes may prevent penetration of legs of a retaining anchor going through the insulating floor panel. If above 10mm, the meshes may be too large to hold legs of a retaining anchors going through the insulating floor panel.

In a preferred embodiment, the aluminium scrim foil is an exposed layer of the insulating floor panel in contact, notably in direct contact, with the heating pipe. The aluminium scrim foil provides a thermal conducting layer over the surface of the floor in contact with the heating pipe and helps to provide an even heat distribution over the heated floor system. The aluminium scrim foil also prevents penetration of the screed into the mineral wool of the insulating floor panel during installation.

The surface of the aluminium scrim foil configured to face outwards preferably comprises a plurality of markers visible to the naked eye, notably markers forming a grid of rows and columns on the exposed surface of the aluminium scrim foil. The space between consecutive rows and columns is preferably constant thus forming a square grid. Each consecutive row and/or column may be spaced by a distance of at least 10cm, at least 15cm and/or less than 25cm, less than 20cm. The grid helps installation of the heating pipe in its desired configuration, notably with parallel, equispaced pipe sections. The grid may be formed by visible straight line or by dotted lines but is preferably formed by spaced markers, e.g. crosses.

The heating pipe preferably comprises a single, continuous pipe element in which a heating fluid flows, notably a plastics heating pipe which is provided in a rolled configuration and which is unwound on site and laid out on the mineral wool insulating panels in its desired configuration. The heating pipe may have an outer diameter of at least 14mm, at least 15mm and/or less than 18mm, less than 17mm. The thickness of the heating pipe may be in the range 1-3mm. Preferably, the heating pipe diameter is between 10 and 20 mm.

The heating pipe may be a composite pipe comprising a laminate, for example a laminate comprising a plastics layer and a metallic layer, for example a layer of aluminium; this helps in minimizing thermal expansion and also provides an oxygen barrier layer. The plastics layer may comprise polyethylene PE, notably cross-linked polyethylene PEX. In one embodiment, the composite heating pipe comprises an outer layer of PE, an aluminium center layer and a PE inner layer, each layer being secured by an adhesive layer. Preferably, however, the heating pipe consists essentially of plastics, for example a polyethylene PE, notably cross-linked polyethylene PEX or PVC; this simplifies the underfloor heating system by using a readily available type of pipe.

The heating pipe is preferably arranged in the underfloor heating system in the form of a serpentine. As used herein the term serpentine denotes that the heating pipe forms a path which at least partially doubles back along its length so that the heating pipe forms an array of spaced pipe sections which together extend the coverage of the heating pipe over the surface of a floor of a room to be heated. The serpentine may take the form of a spiral; it may have one of more loops having straight, parallel sides.

The distance between adjacent pipe sections running parallel to each other is preferably at least 10cm, at least 15cm and/or less than 25cm, less than 20cm.

The fluid which flows within the heating pipe is preferably water. Typically, the water has a temperature between 20 and 30°C, the heat water being preferably provided by a heat pump.

### Retaining anchors

The retaining anchors serve to prevent horizontal and vertical displacement of the heating pipe during installation of the underfloor heating system and comprise
1) legs adapted to be anchored within the insulating floor panel; and
2) a bracket adapted to retain a section of the pipe.

The bracket preferably encircles an upper segment of the heating pipe. In this configuration, a pipe section is firstly arranged in its desired configuration at the upper surface of the insulating floor panel, notably in contact with the exposed facing of the insulating floor panel and then secured with a plurality of retaining anchors. The retaining anchor may comprise legs anchored within the mineral wool panel and a bracket located over the upper segment of the pipe. The bracket is preferably a U-shape bracket, preferably a U-shape bracket having an arcuate section which is curved to contour the outer diameter of the heating pipe. The retaining anchors are preferably made of plastics.

In a preferred embodiment, the retaining anchor comprises two legs extending from each terminal end of the bracket. Particularly when the bracket has a U shape, each leg extends the two ends of the U. Preferably the legs extend parallel to each other. The end of each leg preferably terminates with a point which facilitates insertion through the insulating floor panel. The legs may have a length of at least 1.5cm, at least 2cm, at least 2.5cm and/or less than 5cm, less than 4cm, less than 3.5cm. The preferred range of length of legs is adapted to be inserted into the upper surface of the insulating floor panel without penetrating the support structure below.

Each leg preferably comprises one or more projecting barbs adapted to prevent removal of the retaining anchor once inserted.

An example of a suitable retaining anchor is disclosed in EP2683531.

An embodiment of the invention will now be described, by way of example only, with reference to the accompanying drawings of which:
Fig 1 is a perspective view of an underfloor heating system;
Fig 2 is a schematic, partially cut away perspective view of an insulation panel;
Fig 3 is a schematic cross-section view of the underfloor heating system of Fig 1;
Fig 4 is a perspective view of a retaining anchor.

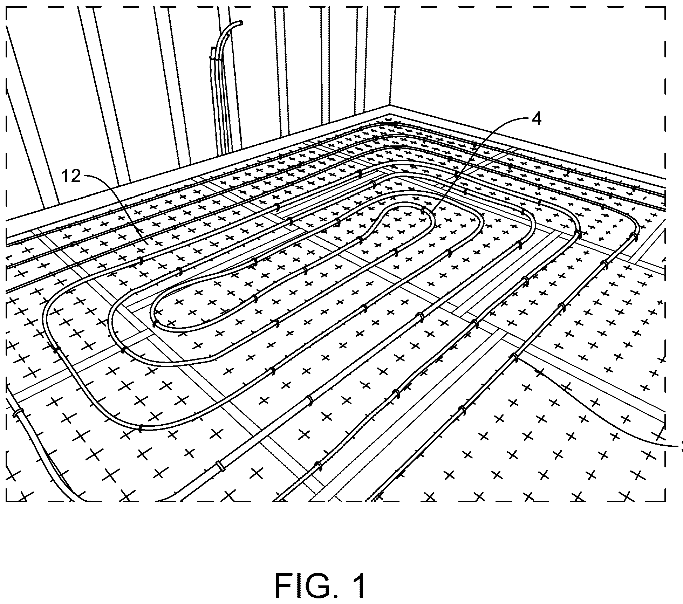

Fig 1 illustrates an underfloor heating system 2 comprising a plurality of insulating floor panels and a heating pipe 4 forming a serpentine secured with anchors 3 which pass through the upper surface of the aluminium scrim foil 12 and into the insulating floor panels.

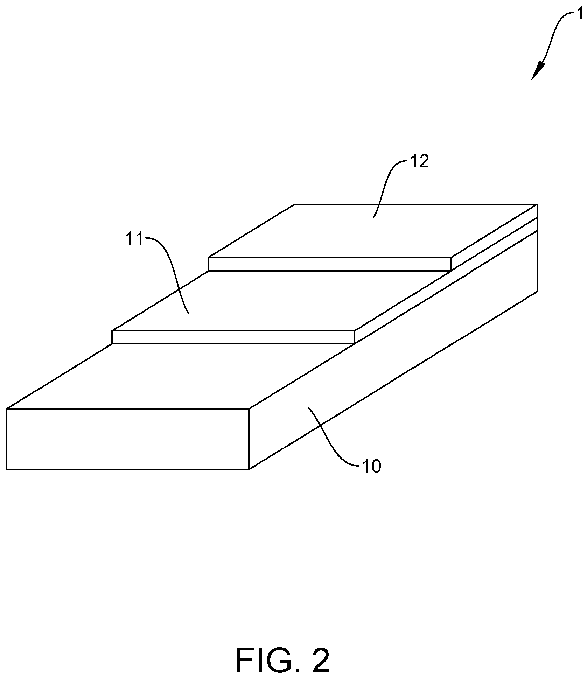

Fig 2 illustrates an insulating floor panel 1 comprising a mineral wool panel 10 of rock wool fibres having a non-woven veil 11 on its upper surface. The non-woven veil 11 is manufactured by applying an inorganic filler comprising talc to a glass veil having a weight of about 50 g/m² and comprising glass fibres (diameter AA: 0.8 to 1.2µm) retained together by a veil binder. The non-woven veil, comprising the talc, has a weight of about 280g/m². The non-woven veil, on which a binder layer is provided on its lower surface, for example by an impregnating roll transporting the non-woven veil, is applied to the upper surface of a batt of freshly formed rock wool fibres moving along a conveyor, before the passage of the batt through a curing oven. When moving through the curing oven, the non-woven veil is secured to the batt by the binder present in the batt and the binder applied onto the non-woven veil, the binders being the same. After the curing oven, an aluminium scrim foil 12 having a weight of about 86g/m² and comprising substantially square openings (each side of the opening being about 5 mm) is secured to the upper surface of the non-woven veil 10 by a PE glue, in an amount of about 22g/m², using a hot drum (about 10s, about 200°C). The mineral wool batt is then cut to size to form a mineral wool panel 10 which has a density of 120kg/m³, a thickness of 30mm, a length of 1200mm and a width of 1000mm. The mineral wool panel of rock wool fibres has a compressive strength of about 34kPa, measured in accordance with EN13162.

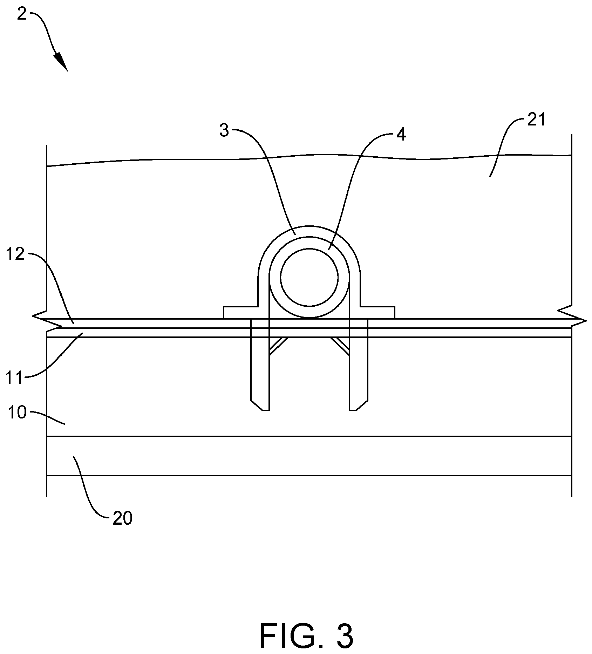

As shown in Fig 3, a plastics heating pipe 4 having an external diameter of 15mm is fastened by means of retaining anchors 3 to a insulating floor panel 1 (only one of which is shown) which is laid on supporting surface of a building, for example a concrete floor of the building structure 20. A screed layer 21 of concrete is poured over the heating pipe which has been previously arranged in its desired configuration and allowed to set to form the underfloor heating system 2.

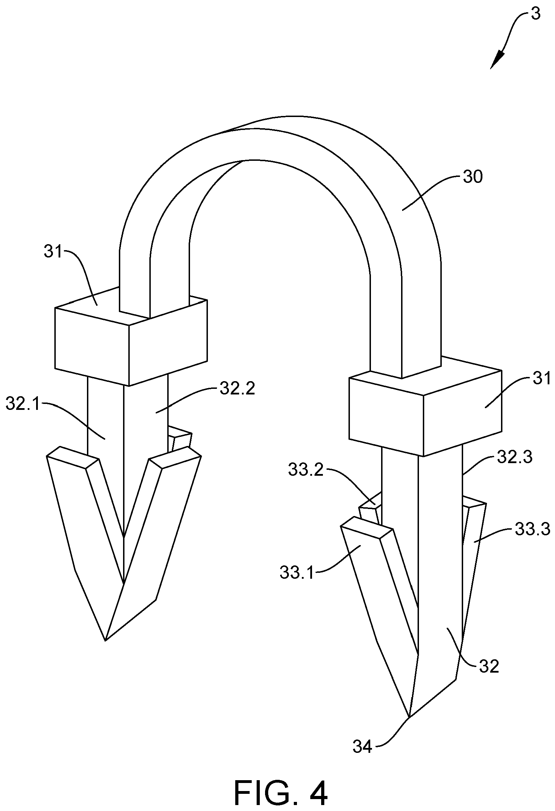

Illustrated in Fig 4, the retaining anchor 3 is a unitary injected-moulded, U-shaped plastics anchor comprising a bracket 30 having an arcuate section which is curved to contour the outer diameter of the heating pipes 4 and two legs 32 substantially parallel to each other, extending the U of the bracket 30. The cross-section of each leg is a square, forming a leg having a front side 32.1, an inner side 32.2 and a rear side 32.3 and a outer side. The leg 32 comprises an inner barb 33.2 on its inner side 32.2, a front barb 33.1 on its front side 32.1 and a rear barb 33.3 on its rear side 32.3, facing away from the bracket. No barb is provided on the outer side. The barbs contribute to retaining the anchor at insulating floor panel. Each leg 32 ends with a point 34 which make the piercing of the insulating floor panel easier. The bracket 30 and each leg 32 are connected each other with a spacer 31, whose underside is adapted to prevent further penetration of the anchors into the insulating floor panel. The length of each leg 32, from the underside of the spacer 31 to the point 34 of the leg, is about 25mm. Each barb forms an acute angle of about 20° with respect of the axis of the leg. The cross-section of the legs, comprising the barbs, is smaller than the cross-section of the spacer.

It has been found that the presence of the reinforcement layer with filler allows the passage of the retaining anchors into the insulating floor panel while providing good retention of the installed retaining anchors.

A plurality of anchors are provided along the length of the heating pipe during its installation over the insulating floor panel.

The following table shows performance measured from the aluminium scrim foil face of i) the insulating floor panels of the example above and ii) a comparative example of an insulating floor panel (identical other than for the absence of the reinforcement layer):

| | **Example (With reinforcement layer)** | **Comparative example (Without reinforcement layer)** |
|---|---|---|
| Point load resistance (N) | 524 | 356 |
| Tacker pull out force (N) | 78 | 15 |
| Walkability compression - 1 step (mm) | 18 | 22 |
| Walkability compression after 55 steps (mm) | 22 | NA |
| Walkability force for 2mm compression - 1 step (N) | 92 | 32 |
| Walkability force for 2mm compression after 55 steps (N) | 31 | NA |

| | | |
|---|---|---|
| Walkability compression was measured by: applying a cylinder having a surface area of 50cm² at a speed of 150 N/s to provide a compression force of 950 N; and determining the compression in mm with the compression force applied after i) a first application of the compression force (1 step) and ii) a cycle of applying and releasing the compression force 55 times (55 steps). Walkability force was measured by: applying a cylinder having a surface area of 50cm²; and determining the force required to induce a 2 mm compression force applied after i) a first application of the compression force (1 step) and ii) a cycle of applying and releasing the compression force 55 times (55 steps). | | |

The form of the cylinder is intended to represent a footprint and the force applied is intended to represent a footfall.

Reference numbers in the figures:
1 insulating floor panel
2 underfloor heating system
3 retaining anchor
4 heating pipe
11 glass veil
12 aluminium scrim foil
20 water-repelling barrier layer
21 screed
30 bracket
31 spacer
32 leg
32.1 front side
32.2 inner side
32.3 rear side
33.1 front barb
33.2 inner barb
33.3 rear barb
34 point

## Claims

1. An underfloor heating system (2) comprising, in order:
- a supporting surface;
- an insulating floor panel (1) comprising a mineral wool insulation panel and an overlying facing comprising an aluminium scrim foil (12) secured to the mineral wool insulation panel;
- a heating pipe (4) arranged and secured over an upper surface of the insulating floor panel by retaining anchors (3) anchored in the insulating floor panel (1); and
- a screed layer (21), notably a concrete layer, embedding the heating pipe (4);
**characterised in that**
the insulating floor panel comprises a reinforcement veil (11) comprising a filler arranged between the mineral wool insulation panel and the aluminium scrim foil.

2. An underfloor heating system (2) according to claim 1, wherein the reinforcement veil (11) has one or more of the following features:
- a weight, including the filler, which is ≥ 150 g/m² and ≤ 300 g/m²; and/or
- a thickness in the range 0.3-1mm ; and/or
- the filler comprises at least 40%wt and/or less than 80%wt of the veil; and/or
- the filler is selected from calcium oxide, calcium hydroxide, aluminium hydroxide, clay, talc, magnesium silicate, hydrated magnesium silicate and mixtures thereof; and/or
- the fibres of the reinforcement veil (11) consist of glass fibres.

3. An underfloor heating system (2) according to any preceding claim, wherein the reinforcement veil (11) is secured to the mineral wool insulation panel by a first adhesive and the aluminium scrim foil (12) is secured to the reinforcing veil (11) by a second adhesive.

4. An underfloor heating system (2) according to claim 3, wherein the aluminium scrim foil (12) and/or the reinforcement veil (11) is(are) secured by a hot melt adhesive, notably PE glue.

5. An underfloor heating system (2) according to claim 1 or claim 2, wherein the mineral wool insulation panel comprises a binder and the reinforcement veil (11) is secured to the mineral wool insulation panel by the same binder as that present in the mineral wool insulation panel.

6. An underfloor heating system (2) according to any preceding claim, wherein the mineral wool panel is a rock wool insulation panel.

7. An underfloor heating system (2) according to any preceding claim, wherein the mineral wool panel has one or more of the following features:
- a density of at least 70 kg/m³, preferably in the range 90-150kg/m³; and/or
- a compressive strength in the range 20-40kPa , as measured in accordance with EN13162; and/or
- a thickness in the range 15-70 mm; and/or
- dynamic stiffness of less than 30 MN/m³, preferably in the range 15-20 MN/m³, as measured according to EN29052-1; and/or
- a compressibility of less than 3mm and/or no more than 5mm, as measured in accordance with EN12431.

8. An underfloor heating system (2) according to any preceding claim, wherein the aluminium scrim foil comprises one or more of the following features:
- the fibres of the scrim are glass fibres; and/or
- the scrim layer comprises square or rectangular openings, preferably wherein each side of such square or rectangular openings is ≥ 5mm, ≥ 7mm and/or < 10mm, < 8mm.

9. An underfloor heating system (2) according to any preceding claim, wherein the underfloor heating system (2) is a hydronics underfloor heating systems in which water flows as a heat transfer medium through the heating pipe (4).

10. An indoor floor of a building comprising the underfloor heating system (2) of any of claims 1-9.

11. A method of manufacturing an insulating floor panel (1) for use in an underfloor heating system (2) in accordance with any of claims 1-9, in which
- the insulating floor panel (1) comprises a mineral wool insulation panel comprising rock wool fibres and an overlying facing comprising an aluminium scrim foil (12) secured to the mineral wool insulation panel and
- in which the insulating floor panel comprises a reinforcement non-woven veil (11) comprising a filler arranged between the mineral wool insulation panel and the aluminium scrim foil;
wherein the insulating floor panel (1) further has the following features
- a density of at least 70 kg/m³, preferably in the range 90-150kg/m³; and
- a compressive strength in the range 20-40kPa , as measured in accordance with EN13162; and
- a thickness in the range 15-70 mm; and
- dynamic stiffness of less than 30 MN/m³, preferably in the range 15-20 MN/m³, as measured according to EN29052-1; and
- a compressibility of less than 3mm and/or no more than 5mm, as measured in accordance with EN12431;
in which the method comprises
- providing a mineral wool insulation batt comprising rock wool fibres;
- securing a non-woven reinforcing veil (11) comprising a filler, at a major surface of the mineral wool insulation batt ; and
- subsequently securing an aluminium scrim foil (12) with an adhesive, notably a hot melt adhesive to the reinforcing non-woven veil (11); and
subsequently cutting the mineral wool insulation batt to form the insulating floor panel (1), wherein securing the reinforcing non-woven veil (11) at the major surface of the mineral wool insulation batt comprises applying the reinforcing non-woven veil (11) at the major surface of the mineral wool batt as the mineral wool insulation batt moves along a manufacturing line, preferably by applying an additional binder onto the surface of the reinforcement non-woven veil (11) in contact with the mineral wool insulation batt, and subsequently securing the reinforcing non-woven veil (11) and the batt together during passage through a curing oven to cure binder present in the mineral wool insulation batt and the optional additional binder.

12. A method of providing an underfloor heating system (2) in accordance with any of claims 1-9 on an indoor floor of a building, comprising
- forming a first layer of a floor by arranging a plurality of insulating floor panels (1):
- subsequently providing and securing with retaining anchors (3) a heating pipe (4) on the upper surface of the first layer of a floor; and
- providing a screed layer (21), notably a concrete layer, embedding the secured heating pipe (4),
wherein the insulating floor panel (1) comprises a mineral wool insulation panel and an overlying facing comprising an aluminium scrim foil (12) secured to the mineral wool insulation panel;
wherein the insulating floor panel comprises a reinforcement veil (11) comprising a filler between the mineral wool insulation panel and the aluminium scrim foil (12).

## Patentansprüche

1. Fußbodenheizungssystem (2), umfassend in der Reihenfolge:
- eine Stütz- bzw. Trägerfläche bzw. -oberfläche;
- eine Isolierbodenplatte (1), die eine Mineralwolleisolierplatte und eine darüberliegende Deckschicht umfasst, die eine an der Mineralwolleisolierplatte befestigte Aluminiumgelege- bzw. - gittergewebefolie (12) umfasst;
- ein Heizrohr (4), das über einer oberen Fläche bzw. Oberfläche der Isolierbodenplatte durch Halteanker (3), die in der Isolierbodenplatte (1) verankert sind, angeordnet und befestigt ist; und
- eine Estrichschicht (21), insbesondere eine Betonschicht, in die das Heizrohr (4) eingebettet ist;
**dadurch gekennzeichnet, dass**
die Isolierbodenplatte eine Armierungs- bzw. Verstärkungslage (11) umfasst, die einen Füllstoff umfasst, der zwischen der Mineralwolleisolierplatte und der Aluminiumgittergewebefolie angerordnet ist.

2. Fußbodenheizungssystem (2) nach Anspruch 1, wobei die Verstärkungslage (11) eines oder mehrere der folgenden Merkmale aufweist:
- ein Gewicht, einschließlich des Füllstoffs, das ≥ 150 g/m² und ≤ 300 g/m² beträgt; und/oder
- eine Dicke in dem Bereich von 0,3-1 mm; und/oder
- der Füllstoff umfasst zumindest 40 Gew.-% und/oder weniger als 80 Gew.-% der Lage; und/oder
- der Füllstoff ist ausgewählt aus Calciumoxid, Calciumhydroxid, Aluminiumhydroxid, Ton, Talkum, Magnesiumsilikat, hydratisiertem Magnesiumsilikat und Gemischen davon; und/oder
- die Fasern der Verstärkungslage (11) bestehen aus Glasfasern.

3. Fußbodenheizungssystem (2) nach einem der vorhergehenden Ansprüche, wobei die Verstärkungslage (11) durch einen ersten Kleber an der Mineralwolleisolierplatte befestigt ist und die Aluminiumgittergewebefolie (12) durch einen zweiten Kleber an der Verstärkungslage (11) befestigt ist.

4. Fußbodenheizungssystem (2) nach Anspruch 3, wobei die Aluminiumgittergewebefolie (12) und/oder die Verstärkungslage (11) durch einen Schmelzkleber, insbesondere PE-Kleber, befestigt ist (sind).

5. Fußbodenheizungssystem (2) nach Anspruch 1 oder 2, wobei die Mineralwolleisolierplatte ein Bindemittel umfasst und die Verstärkungslage (11) an der Mineralwolleisolierplatte mit demselben Bindemittel befestigt ist, wie es in der Mineralwolleisolierplatte vorhanden ist.

6. Fußbodenheizungssystem (2) nach einem der vorhergehenden Ansprüche, wobei die Mineralwolleisolierplatte eine Steinwolleisolierplatte ist.

7. Fußbodenheizungssystem (2) nach einem der vorhergehenden Ansprüche, wobei die Mineralwolleisolierplatte eines oder mehrere der folgenden Merkmale aufweist:
- eine Dichte von zumindest 70 kg/m³, vorzugsweise in dem Bereich von 90-150 kg/m³; und/oder
- eine Druckfestigkeit in dem Bereich von 20-40 kPa, gemessen nach **EN** 13162; und/oder
- eine Dicke in dem Bereich von 15-70 mm; und/oder
- eine dynamische Steifigkeit von weniger als 30 MN/m³, vorzugsweise in dem Bereich von 15-20 MN/m³, gemessen nach **EN** 29052-1; und/oder
- eine Kompressibilität von weniger als 3 mm und/oder nicht mehr als 5 mm, gemessen nach EN 12431.

8. Fußbodenheizungssystem (2) nach einem der vorhergehenden Ansprüche, wobei die Aluminiumgittergewebefolie eines oder mehrere der folgenden Merkmale umfasst:
- die Fasern des Geleges bzw. des Gittergewebes sind Glasfasern; und/oder
- die Gelege- bzw. Gittergewebeschicht umfasst quadratische oder rechteckige Öffnungen, vorzugsweise wobei jede Seite von solchen quadratischen oder rechteckigen Öffnungen ≥ 5 mm, ≥ 7 mm und/oder < 10 mm, < 8 mm beträgt.

9. Fußbodenheizungssystem (2) nach einem der vorhergehenden Ansprüche, wobei das Fußbodenheizungssystem (2) ein hydraulisches Fußbodenheizungssystem ist, bei dem Wasser als ein Wärmeübertragungsmedium durch das Heizrohr (4) fließt.

10. Innenboden eines Gebäudes, der das Fußbodenheizungssystem (2) nach einem der Ansprüche 1-9 umfasst.

11. Verfahren zum Herstellen einer Isolierbodenplatte (1) zur Verwendung in einem Fußbodenheizungssystem (2) nach einem der Ansprüche 1-9, in dem
- die Isolierbodenplatte (1) eine Mineralwolleisolierplatte, die Steinwollefasern umfasst, und eine darüberliegende Deckschicht umfasst, die eine an der Mineralwolleisolierplatte befestigte Aluminiumgelege- bzw. - gittergewebefolie (12) umfasst, und
- in dem die Isolierbodenplatte eine Verstärkungsvlieslage (11) umfasst, die einen Füllstoff umfasst, der zwischen der Mineralwolleisolierplatte und der Aluminiumgittergewebefolie angeordnet ist;
wobei die Isolierbodenplatte (1) ferner die folgenden Merkmale aufweist:
- eine Dichte von zumindest 70 kg/m³, vorzugsweise in dem Bereich von 90-150 kg/m³; und
- eine Druckfestigkeit in dem Bereich von 20-40 kPa, gemessen nach EN 13162; und
- eine Dicke in dem Bereich von 15-70 mm; und
- eine dynamische Steifigkeit von weniger als 30 MN/m³, vorzugsweise in dem Bereich von 15-20 MN/m³, gemessen nach EN 29052-1; und
- eine Kompressibilität von weniger als 3 mm und/oder nicht mehr als 5 mm, gemessen nach EN 12431,
wobei das Verfahren umfasst:
- Bereitstellen einer Mineralwolleisoliermatte, die Steinwollefasern umfasst;
- Befestigen einer Vliesverstärkungslage (11), die einen Füllstoff umfasst, an einer Hauptfläche bzw. -oberfläche der Mineralwolleisoliermatte; und
- anschließendes Befestigen einer Aluminiumgelege- bzw. -gittergewebefolie (12) mit einem Kleber, insbesondere einem Schmelzkleber, an der Verstärkungsvlieslage (11); und
anschließendes Schneiden der Mineralwolleisoliermatte, um die Isolierbodenplatte (1) zu bilden, wobei das Befestigen der Verstärkungsvlieslage (11) an der Hauptoberfläche der Mineralwolleisoliermatte ein Aufbringen der Verstärkungsvlieslage (11) an der Hauptfläche der Mineralwollematte umfasst, während sich die Mineralwolleisoliermatte entlang einer Fertigungsstraße bewegt, vorzugweise durch Aufbringen eines zusätzlichen Bindemittels auf die Oberfläche der Verstärkungsvlieslage (11), die mit der Mineralwolleisoliermatte in Kontakt ist, und anschließendes Befestigen der Verstärkungsvlieslage (11) und der Matte zusammen bzw. miteinander während des Durchlaufs durch einen Härteofen, um das in der Mineralwolleisoliermatte vorhandene Bindemittel und das optionale zusätzliche Bindemittel auszuhärten.

12. Verfahren zum Bereitstellen eines Fußbodenheizungssystems (2) nach einem der Ansprüche 1-9 auf einem Innenboden eines Gebäudes, umfassend:
- Bilden einer ersten Schicht eines Bodens durch Anordnen einer Mehrzahl von Isolierbodenplatten (1);
- anschließendes Bereitstellen und Befestigen eines Heizrohrs (4) auf der oberen Fläche bzw. Oberfläche der ersten Schicht eines Bodens mit Halteankern (3); und
- Bereitstellen einer Estrichschicht (21), insbesondere einer Betonschicht, in die das befestigte Heizrohr (4) eingebettet ist,
wobei die Isolierbodenplatte (1) eine Mineralwolleisolierplatte und eine darüberliegende Deckschicht umfasst, die eine an der Mineralwolleisolierplatte befestigte Aluminiumgelege- bzw. -gittergewebefolie (12) umfasst;
wobei die Isolierbodenplatte eine Verstärkungslage (11) umfasst, die einen Füllstoff zwischen der Mineralwolleisolierplatte und der Aluminiumgittergewebefolie (12) umfasst.

## Revendications

1. Système de chauffage par le sol (2) comprenant, dans cet ordre :
- une surface portante ;
- un panneau de plancher isolant (1) comprenant un panneau isolant de laine minérale et un revêtement superposé comprenant une feuille d'aluminium renforcée d'une grille (12) fixé au panneau isolant de laine minérale ;
- un tuyau de chauffage (4) disposé et fixé sur une surface supérieure du panneau de plancher isolant par des ancrages de retenue (3) ancrés dans le panneau de plancher isolant (1) ; et
- une couche de chape (21), notamment une couche de béton, enrobant le tuyau de chauffage (4) ;
**caractérisé en ce que**
le panneau de plancher isolant comprend un voile de renfort (11) comprenant une charge disposée entre la panneau isolant de laine minérale et la feuille d' aluminium renforcée d'une grille.

2. Système de chauffage par le sol (2) selon la revendication 1, où le voile de renfort (11) a une ou plusieurs des caractéristiques suivantes :
- un poids, incluant la charge, qui est ≥ 150 g/m² et ≤ 300 g/m² ; et/ou
- une épaisseur dans la gamme 0,3 - 1 mm ; et/ou
- la charge représente au moins 40% en poids et/ou moins de 80% en poids du voile ; et/ou
- la charge est sélectionnée parmi de l'oxyde de calcium, l'hydroxyde de calcium, l'hydroxyde d'aluminium, l'argile, le talc, le silicate de magnésium, le silicate de magnésium hydraté et leurs mélanges ; et/ou
- les fibres du voile de renfort (11) consistent en des fibres de verre.

3. Système de chauffage par le sol (2) selon l'une quelconque revendication précédente, où le voile de renfort (11) est fixé au panneau isolant de laine minérale par un premier adhésif et la feuille d'aluminium renforcée d'une grille (12) est fixée au voile de renfort (11) par un second adhésif.

4. Système de chauffage par le sol (2) selon la revendication 3, où la feuille d' aluminium renforcée d'une grille (12) et/ou le voile de renfort (11) est (sont) fixé(e)(s) par un adhésif thermofusible, notamment de la colle PE.

5. Système de chauffage par le sol (2) selon la revendication 1 ou la revendication 2, où le panneau isolant de laine minérale comprend un liant et le voile de renfort (11) est fixé au panneau isolant de laine minérale par le même liant que celui présent dans le panneau isolant de laine minérale.

6. Système de chauffage par le sol (2) selon l'une quelconque revendication précédente, où le panneau de laine minérale est un panneau isolant de laine de roche.

7. Système de chauffage par le sol (2) selon l'une quelconque revendication précédente, où le panneau isolant de laine minérale a une ou plusieurs des caractéristiques suivantes :
- une densité d'au moins 70 kg/m³, de préférence dans la gamme 90-150 kg/m³; et/ou
- une résistance à la compression dans la gamme 20-40 kPa, telle que mesurée selon EN13162 ; et/ou
- une épaisseur dans la gamme 15-70 mm ; et/ou
- une rigidité dynamique inférieure à 30 MN/m³, de préférence comprise entre 15 et 20 MN/m³, telle que mesurée selon EN29052-1 ; et/ou
- une compressibilité inférieure à 3 mm et/ou inférieure ou égale à 5 mm, mesurée selon EN12431.

8. Système de chauffage par le sol (2) selon l'une quelconque revendication précédente, où la feuille d'aluminium renforcée d'une grille a une ou plusieurs des caractéristiques suivantes :
- les fibres de la grille sont des fibres de verre ; et/ou
- la feuille de grille comprend des ouvertures carrées ou rectangulaires, de préférence où chaque côté de ces ouvertures carrées ou rectangulaires est ≥ 5mm, ≥ 7mm et/ou < 10mm, < 8mm.

9. Système de chauffage par le sol (2) selon l'une quelconque revendication précédente, où le système de chauffage par le sol (2) est un système de chauffage par le sol hydronique dans lequel de l'eau circule comme fluide caloporteur à travers le tuyau de chauffage (4).

10. Sol intérieur d'un bâtiment comprenant le système de chauffage par le sol (2) selon l'une des revendications 1-9.

11. Procédé de fabrication d'un panneau de plancher isolant (1) pour utilisation dans un système de chauffage par le sol (2) selon l'une des revendications 1-9, où
- le panneau de plancher isolant (1) comprend un panneau isolant de laine minérale comprenant des fibres de laine de roche et un revêtement superposé comprenant d'une feuille d'aluminium renforcée d'une grille (12) fixée au panneau isolant de laine minérale, et
- le panneau de plancher isolant comprend un voile non tissé de renfort (11) comprenant une charge disposée entre le panneau isolant en laine minérale et la feuille d'aluminium renforcée d'une grille ;
où le panneau de sol isolant (1) présentant en outre les caractéristiques suivantes :
- une densité d'au moins 70 kg/m³, de préférence dans la gamme 90-150 kg/m³ ; et
- une résistance à la compression dans la gamme 20-40 kPa, telle que mesurée selon EN13162 ; et
- une épaisseur dans la gamme 15-70 mm ; et
- une rigidité dynamique inférieure à 30 MN/m³, de préférence comprise entre 15 et 20 MN/m³, telle que mesurée selon EN29052-1 ; et
- une compressibilité inférieure à 3 mm et/ou inférieure ou égale à 5 mm, mesurée selon EN12431 ;
où le procédé comprend
- mettre à disposition un matelas isolant de laine minérale comprenant des fibres de laine de roche ;
- fixer un voile de renfort non tissé (11), notamment comprenant une charge, sur une surface principale du matelas isolant de laine minérale ; et
- ensuite fixer une feuille d'aluminium renforcée d'une grille (12) au voile de renfort non tissé (11) à l'aide d'un adhésif, notamment un adhésif thermofusible au voile de renfort non tissé (11) ; et
ensuite découper le matelas isolant de laine minérale pour former le panneau de plancher isolant (1),
où fixer le voile de renfort non tissé (11) sur une surface principale du matelas isolant de laine minérale comprend appliquer le voile de renfort non tissé (11) sur une surface principale du matelas isolant de laine minérale tandis que le matelas isolant de laine minérale se déplace le long d'une ligne de fabrication, de préférence en appliquant un liant additionnel sur la surface du voile de renfort non-tissé (11) en contact avec le matelas isolant de laine minérale, et
ensuite fixer le voile de renfort non-tissé (11) et le matelas ensemble durant le passage à travers un four de réticulation pour réticuler le liant présent dans le matelas isolant de laine minérale et le liant additionnel optionnel.

12. Procédé de mise à disposition d'un système de chauffage par le sol (2) selon l'une quelconque des revendications 1 à 9 sur le sol intérieur d'un bâtiment comprenant:
- former une première couche d'un plancher par la disposition de plusieurs panneaux de plancher isolants (1) ;
- ensuite mettre à disposition et fixer avec des ancrages de retenue (3) un tuyau de chauffage (4) sur la surface supérieure de la première couche d'un plancher ; et
- mettre à disposition une couche de chape (21), notamment une couche de béton, enrobant le tuyau de chauffage fixé (4),
où le panneau de plancher isolant (1) comprend un panneau isolant de laine minérale et un revêtement superposé comprenant d'une feuille d'aluminium renforcée d'une grille (12) fixé au panneau isolant de laine minérale ;
où le panneau de plancher isolant comprend un voile de renfort (11) comprenant une charge entre le panneau isolant de laine minérale et la feuille d'aluminium renforcée d'une grille (12).
